# EUROPEAN PATENT APPLICATION

(11) **EP 2 273 394 A1**
(43) Date of publication of application: **12.01.2011**
(21) Application number: 09721377.1
(22) Date of filing: 12.01.2009
(51) Int. Cl.: G06F 17/30

(54) **DOCUMENT PROCESSING METHOD, SYSTEM AND DEVICE**

(30) Priority: 18.03.2008 CN 200810102154
(71) Applicant: Sursen Corp., Beijing 100089 (CN)
(72) Inventor: WANG, Donglin, Beijing 100089 (CN)
(74) Representative: Charles, Glyndwr
(86) International application number: PCT/CN2009/070106
(87) International publication number: WO 2009/114999

(57) **Abstract**

The present invention provides a system, method and apparatus for document processing to process documents in different formats. The method for document processing includes: recording layout information of a document to be operated, converting the document to be operated into a document conforming to a docbase standard based on the layout information recorded; invoking a standard interface of a docbase management system to open the document conforming to the docbase standard.

## Description

### FIELD OF THE INVENTION

The present invention relates to computer software technology, and particularly, to a method, system and apparatus for document processing.

### BACKGROUND OF THE INVENTION

Electronic documents are files stored as data in computers. Hereinafter, the electronic documents are shortened as documents. When being edited via a computer, a document is generally edited and stored in accordance with a certain format which is referred to as a document format. Typical document formats include Word, ODF, PDF, etc. Specific information, such as texts and images, etc., saved in the document is referred to as document contents.

Diversified document formats may cause a lot of trouble hindering spreading of documents, so there is need for a technique which enables to process documents in different document formats.

When processing a document, application software usually has to parse document contents according to a document format and carry out certain operations on the parsed document contents. Therefore, a developer has to have full knowledge about the document format before developing the software for processing the document in the document format because the software has to parse the document before any operation. It can be seen that, the more document formats the software supports, the more complex the software is. Document formats are different with each other, which makes it impossible to handle all the various document formats, so each kind of document processing software currently in use may only support a limited number of document formats. Thus, in document processing, any software may face problems resulted from incompatible document formats.

For example, electronic seal software supporting ODF documents is able to stamp a seal on an ODF document. If the document format is Word format, the electronic seal software cannot be used for signing the document. To solve the above problem, some conversion tools may be adopted to perform conversion between document formats. For example, converting software may be used for parsing a Word document and converting the Word document into an ODF document. The above method, however, requires spending on the converting tool and time for performing document conversion. Furthermore, there is often no such conversion tool available for conversion between certain document formats. There is another solution where a user uses Open Office instead to edit a Word document and generate an ODF document, and then seals the ODF document using the electronic seal software. However, before editing the document using other software, the user has to be familiar with the software, e.g., Open Office, which requires efforts to learn how to use the software. In addition, when only a specific editing software is permitted to be used in some cases, it is impossible to use any editing software else.

It can be seen that, current document processing software cannot provide support for multiple document formats, thus lacks the ability to process documents with different formats.

### SUMMARY OF THE INVENTION

Embodiments of the present invention present a method, system and apparatus for document processing which simultaneously supports different document formats, thus implements operations on documents in different formats.

The method for document processing in accordance with an embodiment of the present invention includes:
recording layout information of a document to be operated; converting the document to be operated into a document conforming to a docbase standard based on the layout information recorded; and
opening the document conforming to the docbase standard by invoking a standard interface of a docbase management system.

The system for document processing in accordance with an embodiment of the present invention includes a document processing apparatus, an application software and a docbase management system, where
the document processing apparatus is adapted to record layout information of a document to be operated by the application software, convert the document into a document conforming to a docbase standard according to the layout information recorded;
the application software is adapted to invoke a standard interface of the docbase management system and open the document conforming to the docbase standard converted by the document processing apparatus.

The system for document processing in accordance with an embodiment of the present invention includes:
an application software, adapted to record layout information of a document to be operated, convert the document into a document conforming to a docbase standard based on the layout information recorded; to invoke a standard interface of a docbase management system and open the document conforming to the docbase standard.

The apparatus for document processing in accordance with an embodiment of the present invention includes:
a first module, adapted to record layout information of a document to be operated;
a second module, adapted to convert the document into a document conforming to a docbase standard based on the layout information recorded by the first module.

It can be seen from the above technical schemes that the layout information of the document to be operated by the application software is recorded (no matter whether the document format of the document is supported by the application software), and the document is converted into a document conforming to the docbase standard based on the layout information recorded, then the operations to be performed on the document is performed on the document conforming to the docbase standard. Therefore, the method, system and apparatus provided by embodiments of the present invention can support different document formats simultaneously, thus can implement operations on documents in different formats.

Embodiments of the present invention record the layout information of document in a specific document format and generate the document which has the same layout information with the document in the specific document format and conforms to a docbase standard, and carry out operations on the document conforming to the docbase standard to implement processing of the document in the specific document format. From a user's perspective, it feels like the operations are done on the document to be operated. Therefore, the technical scheme provided by embodiments of the present invention does not involve parsing of the format of the document in the specific document format, and can implement processing of document in any document format.

### BRIEF DESCRIPTION OF THE DRAWINGS

**FIG.1** is a schematic diagram illustrating a structure of a system for document processing in accordance with an embodiment of the present invention.
**FIG.2** is a flowchart illustrating a method for document processing in accordance with an embodiment of the present invention.
**FIG.3** is a flowchart illustrating a method for document processing in accordance with an embodiment of the present invention.
**FIG.4** is a flowchart illustrating a process performed by an apparatus for document processing in accordance with an embodiment of the present invention.

### DETAILED DESCRIPTION OF THE INVENTION

In order to make the technical scheme and merits of the present invention clearer, the present invention will be described in detail hereinafter with reference to accompanying drawings.

The present invention is mainly about: recording layout information of an original document, generating a document conforming to a docbase standard corresponding to the original document based on the layout information recorded, and performing an operation on the document conforming to the docbase standard.

The layout information of the original document may be recorded through virtual printing. Based on the layout information, the document conforming to the docbase standard corresponding to the original document is generated. The layout information of the original document may also be recorded using other converting software. And based on the layout information, the document conforming to the docbase standard corresponding to the original document is generated.

Hereinafter, the virtual printing technique and the docbase management system technique will be described in detail.

The virtual printing technique is a technique which generates documents via a virtual printing interface. Through this technique, it is possible to record layout information of a document and generate a document in a certain document format without parsing the format of the document. Since the virtual printing technique can obtain information of the document without parsing the format of the document, it supports any document format that can be printed. A high quality virtual printer is like a real printer. Software may choose the virtual printer for printing a document. Unlike real printers, the virtual printer does not need hardware support, and the result of the printing is generation of a document. This technique has been widely applied and will not be described further herein.

The docbase management system technique: a docbase management system is a platform software providing processing for unstructured documents (also referred to as unstructured data or unstructured information) including storing, reading/writing, parsing, presenting, organizing, managing, security and searching and so on, and also provides a standard interface for invoking by application software. The standard interface is also referred to as a docbase standard interface or a docbase management system standard interface, and the standard of the standard interface is called as a docbase standard. Data stored in a docbase management system is called as a docbase which refers to data accessible via the docbase standard interface. The data is also referred to as document conforming to the docbase standard, which means that the storage format of the document is supported by software conforming to the docbase standard. A patent application submitted by the applicant with application number CN2005101310720.0 provides a docbase processing system including a docbase management system, a storage and application software, where data of the docbase management system is stored in the storage, and the docbase management system and the application software are communicatively connected via a docbase standard interface. Different standard interfaces provide different processing operations for a document. The application software may send instructions to the docbase management system by invoking the standard interface, and the docbase management system performs corresponding operations on a document stored in the storage following the instructions of the application software.

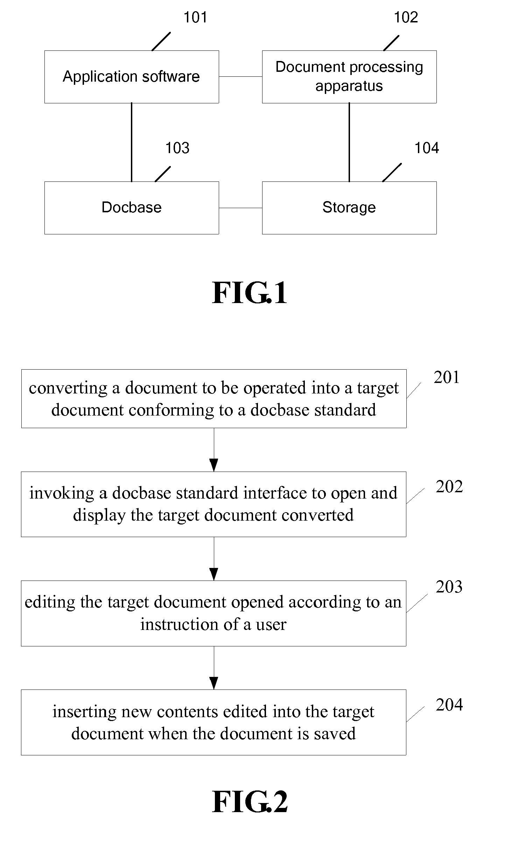

**FIG.1** is a schematic diagram illustrating a structure of a system for document processing in accordance with an embodiment of the present invention. As shown in **FIG.1****,** the system includes application software **101,** a document processing apparatus 102 and a docbase management system **103,** and may further include a storage **104.**

Suppose the application software **101** is to process a document, and the format of the document is not supported by the application software **101.**

At this time, the document processing apparatus **102** is adapted to record layout information of the document to be operated by the application software **101,** and convert the document into a document conforming to a docbase standard according to the layout information recorded.

The application software **101** is adapted to invoke a standard interface of the docbase management system **103** to open the document conforming to the docbase standard, invoke the standard interface of the docbase management system **103** according to requirements of a user to edit a target document opened.

The docbase management system **103** is adapted to perform operations including opening and editing in response to the invoking of the application software **101,** and to return results of the operations to the application software **101.** The detailed process of the application software **101** invoking the standard interface of the docbase management system **103** is described in the specification of the patent application with application number CN200510131072.0 submitted by the applicant.

In implementation, the document processing apparatus **102** may be part of the application software **101.** At this time, the application software **101** may further have functions of the document processing apparatus **102** besides the functions described above. The document processing apparatus **102** may also be independent software, and when being used, it can be installed as a plug-in into a system where the application software **101** is running.

The storage **104** may be used for storing the target document converted.

**FIG.2** is a flowchart illustrating a method for document processing in accordance with an embodiment of the present invention. The following steps may be implemented by the modules in the system for document processing as shown in **FIG.1****.** As shown in **FIG.2****,** the method includes steps as follows.

Step **201** involves: recording layout information of a document to be operated, and converting the document into a document conforming to a docbase standard based on the layout information recorded.

In this step, the document to be operated by application software is firstly converted into the document conforming to the docbase standard. The document to be operated may be a document in any document format. And a target document refers to the document conforming to the docbase standard after conversion. In the following description, the document before the conversion may also be referred to as an operated document.

Step **202** involves invoking the standard interface of a docbase management system to open and display the target document.

In this step, the application software opens and displays the target document using the standard interface of the docbase management system, such as Unstructured Operation Markup Language (UOML) interface.

After the document is displayed, the application software may preferably edit and save contents of the target document, which may include the following steps.

Step **203** involves invoking the standard interface of the docbase management system to edit the target document opened according to an instruction of a user.

Step **204** involves inserting new contents generated during the editing into the target document when the document is saved.

In this step, the new contents generated during the editing in step **203** may be inserted into the target document by invoking the standard interface of the docbase management system, or by directly generating a document according to a format conforming to the docbase standard, i.e., generating a new document conforming to the docbase standard based on layout information of the target document and the new contents.

From the above process it can be seen that the target document can be opened and processed via the docbase management system by recording layout information of the operated document and converting the operated document into the target document conforming to the docbase standard according to the layout information recorded, e.g. by utilizing a virtual printer to convert the operated document into the target document. In this way, operations can be performed on documents in different formats without having to modify the application software for supporting various document formats, thus complex works for planning the modifications can be avoided, and the user can save time and costs for converting the document.

Detailed implementation of the present invention is hereinafter described in detail with reference to specific embodiments. The UOML standard is taken as an exemplary docbase standard.

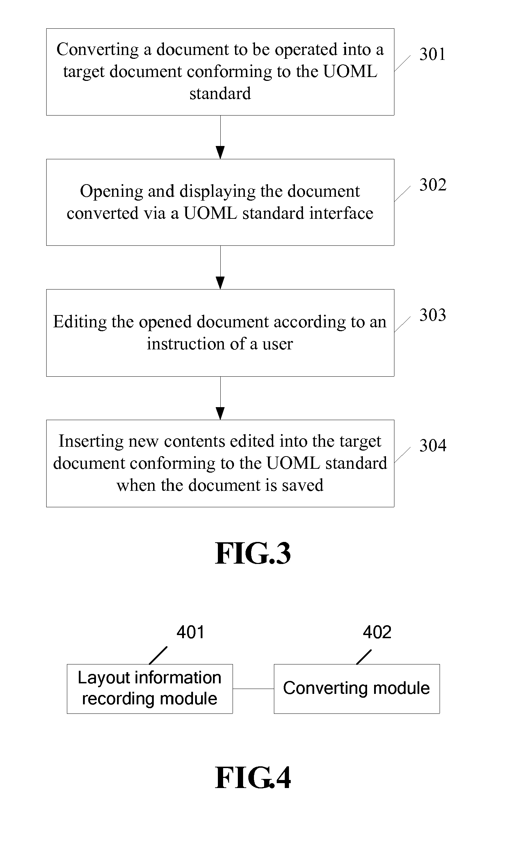

**FIG.3** is a flowchart illustrating a method for document processing in accordance with an embodiment of the present invention. The following steps may be implemented by the modules shown in **FIG.1** in the system for document processing. As shown in **FIG.3**, the method includes steps as follows.

Step **301** involves recording layout information of a document to be operated by application software, and converting the document to be operated into a target document conforming to the UOML standard based on the layout information recorded.

In this step, the document may be converted into the target document conforming to the UOML standard by a virtual printer or by other conversion software.

Specifically, when the virtual printer is adopted, a printing interface of software supporting the format of operated document is invoked, and the virtual printer supporting the UOML standard is then triggered to print the operated document. The document outputted by the virtual printer is the document conforming to the UOML standard.

Step **302** involves opening and displaying the target document conforming to the UOML standard via a UOML standard interface.

The standard interface for document opening and displaying of the UOML standard may be directly invoked for opening and displaying the target document after the conversion. Operations of the opening and displaying are performed by the docbase management system. In this way, the document whose format is not supported by the application software can be opened and displayed. The method for invoking the UOML standard interface is described in detail in the specification of a previous patent application of the applicant with application number CN200510131072.0.

Step **303** involves editing the target document opened according to an instruction of a user.

Contents of the target document have been displayed after step **302.** That is, the contents of the target document have been displayed on a screen of the user. Then, the user may input an instruction according to his/her requirement through a keyboard or a mouse to edit the target document utilizing functions provided by the application software. The application software performs certain processing following a processing logic according to the instruction inputted by the user. It should be noted that the contents of the target document cannot be modified at this time. Instead, the application software uses the contents of the target document displayed as a background and displays contents newly edited by the user on the background. In detail, the docbase management system may take displayed contents of the target document as a layer, and generate a new layer on that layer for saving contents newly edited by the user. The two layers are displayed in an overlapping manner.

Step **304** involves inserting new contents generated during the editing into the target document conforming to the UOML standard when saving the document.

In this step, the new contents edited according to the instruction of the user in step **304** are inserted into the document conforming to the docbase standard, so as to save an edited result.

The detailed saving manner may include:
1. Invoking a standard interface of the docbase management system, inserting layout information of contents newly edited into the target document conforming to the docbase standard.
2. Invoking a virtual printer to record the layout information of the contents newly edited, and inserting the contents newly edited into the target document according to the recorded layout information of the contents newly edited.
3. Creating a new layer for a currently edited page in the target document, and saving the contents newly edited into the layer newly created.
4. Saving the contents newly edited in a format supported by the application software, and embedding the contents newly edited into the target document conforming to the docbase standard as a source file. After that, next time when the document is opened and displayed, the contents newly edited will be displayed not via a display interface provided by the invoked docbase management system but by the application software after parsing which at the same time provide functions for editing the contents.

It should be noted that, the above four manners are descriptions of the saving manner from different aspects. Thus, in practice, any one or any combination of the above four manners may be adopted for saving the contents newly edited. When the fourth manner is combined with any of the other three manners, a user may select whether the contents newly edited is to be displayed by the display interface of the docbase management system or to be parsed and displayed by the application software. The selection may also be implemented by using default settings.

Now, the process of the method in accordance with the embodiment of the present invention is completed. From the above process it can be seen that, through the method for document processing according to the embodiment of the present invention, the application software is enabled to perform operations on documents in different formats, including formats supported and formats not supported by the application software, which makes it easier for the user to process documents.

In the above embodiments of the present invention, the standard interface of the docbase management system may be any interface, and should not be limited to the UOML standard interface.

A detailed example will be described hereinafter for illustrating the implementation of the above method. In this example, suppose a developer provides a text editing software called DocEditor which supports a document format called Encoding Control File (ECF) defined by the DocEditor but does not support the document format of Word. But the user can only edit documents using Word, thus expecting to use DocEditor for editing Word documents. The process of editing a Word document following the method provided by the present invention may be as follows.

First of all, when DocEditor is invoked for opening a Word document, DocEditor invokes a printing interface of Word to convert the Word document into a document conforming to the UOML standard utilizing a virtual printing program.

Then, DocEditor invokes a UOML standard interface to open the document conforming to the UOML standard and to display contents of the document.

After that, DocEditor edits new contents via editing functions owned by DocEditor, where all operations are the same with those for editing an ECF document defined in DocEditor.

When the contents newly edited are to be saved into hardware, DocEditor may perform the following operations:
1) Saving layout information of the new contents as a document conforming to the UOML standard using a UOML instruction.
2) Converting the new contents into a new docbase standard instruction using a printing instruction by a virtual printer, and inserting the instruction generated into the document conforming to the UOML standard being edited.
3) Creating a new layer for a page currently being edited, and saving the new contents into the layer newly created in a format supported, such as ECF format; when the page edited is to be displayed, DocEditor parses and displays the new contents in the layer and provides functions for editing the contents, meanwhile the display interface of the docbase management system may be instructed not to display the layer saving the new contents.

The above manners 1) to 3) may be adopted collectively or individually. The document format of the document generated and saved may vary with the docbase management system utilized, e.g., a document in Sursen Exchangable Platform (SEP) format may be generated when a stand-alone SEP docbase management system is used. The developer of DocEditor may also develop a docbase management system supporting ECF format, in which case a standard interface of the docbase management system will be invoked to save the edited result as an ECF document.

It can be seen that the DocEditor software is enabled to edit a Word document via the virtual printer and the docbase technique although DocEditor does not support Word document format.

Obviously, in this example, a document processing apparatus acts as part of the DocEditor software.

When adopting the method of embodiments of the present invention in practice, system environment of a user is required to include an editing software which supports the document format of a document to be operated (e.g. an office software for editing Word documents), and is required to support the docbase standard, so as to implement the conversion from the document to be operated into the target document in the system employing the method of embodiments of the present invention and to implement operations including displaying and saving the document by invoking standard interfaces of the docbase management system.

**FIG.4** is a schematic illustrating a structure of a document processing apparatus in accordance with an embodiment of the present invention. As shown in **FIG.4****,** the apparatus may include: a layout information recording module and a converting module.

The layout information recording module **401** is adapted to record layout information of a document to be operated by application software.

The converting module **402** is adapted to convert the document to be operated by the application software into a document conforming to a docbase standard based on the layout information recorded by the layout information recording module **401.**

The document processing apparatus may also be part of the application software, in which case the application software may include, besides the layout information recording module and the converting module, a displaying module adapted to open the document conforming to the docbase standard converted by the converting module **402** through invoking a standard interface of the docbase management system.

In addition, the application software may further include an editing module adapted to invoke the standard interface of the docbase management system according to an instruction of a user for editing the document conforming to the docbase standard opened by the displaying module.

It can be understood that the document processing apparatus in embodiments of the present invention may be implemented by computer software. Computer software contains computer programming codes. When running in a computer, those programming codes may carry out one or multiple steps of the method provided by the embodiments of the present invention or having functions of one or multiple modules of the apparatus provided by the embodiments of the present invention. For example, a section of the computer programming codes running in a computer can implement step **101.**

The computer software may be stored in a computer readable medium, such as Read Only Memory (ROM), Random Access Memory (RAM), flash memory, etc.

It can also be understood that the method, system and apparatus provided by embodiments of the present invention can be applied in various software systems, and should not be limited to the application software mentioned in the patent application of the applicant with application number CN200510131072.0. A software system which runs a program conforming to the method provided by embodiments of the present invention may record layout information of a document to be operated, convert the document to be operated into a document conforming to the docbase standard based on the layout information recorded, and performing operations which are to be performed to the document to be operated to the document conforming to the docbase standard by invoking standard interfaces of the docbase management system.

The foregoing description is only a preferred embodiment of the present invention and is not for use in limiting the protection scope thereof. Any modification, equivalent replacement and improvement made under the spirit and principle of the present invention should be included in the protection scope thereof.

## Claims

1. A method for document processing, comprising:
recording layout information of a document to be operated; converting the document to be operated into a document conforming to a docbase standard based on the layout information recorded; and
opening the document conforming to the docbase standard by invoking a standard interface of a docbase management system.

2. The method of claim 1, further comprising:
after opening the target document, calling a standard interface of the docbase management system to edit the opened document conforming to the docbase standard according to an instruction of a user; and
inserting new contents edited into the document conforming to the docbase standard when saving the document.

3. The method of claim 1, comprising: invoking a virtual printer for recording the layout information of the document to be operated, and converting the document to be operated into the document conforming to the docbase standard based on the layout information recorded.

4. The method of claim 3, wherein the invoking the virtual printer for recording the layout information of the document to be operated and converting the document to be operated into the document conforming to the docbase standard based on the layout information recorded comprises:
opening the document to be operated, invoking a printing interface of a software supporting the document format of the target document to generate printed data, and sending the printed data into the virtual printer supporting the docbase standard to print the document, wherein the document outputted is the document conforming to the docbase standard.

5. The method of claim 2, wherein the inserting the new contents edited into the document conforming to the docbase standard comprises:
invoking the standard interface of the docbase management system, inserting layout information of the new contents edited into the document conforming to the docbase standard; or
invoking a virtual printer to record layout information of the new contents edited, and inserting the new contents edited into the document conforming to the docbase standard based on the recorded layout information of the new contents edited.

6. The method of claim 2, wherein the editing the document conforming to the docbase standard comprises:
editing a page of the document conforming to the docbase standard;
wherein the inserting the new contents edited into the document conforming to the docbase standard comprises:
creating a new layer for the page being edited in the document conforming to the docbase standard, and saving the new contents edited into the new layer.

7. The method of claim 2, wherein the inserting the new contents edited into the document conforming to the docbase standard comprises:
saving the new contents edited in a format of the document to be operated, and embedding the saved new contents into the document conforming to the docbase standard as a source file.

8. The method of claim 7, further comprising: when reopening the target document conforming to the docbase standard which is saved after being edited, retrieving contents of the source file directly in the format of the source file, and retrieving contents not included in the source file by invoking the standard interface of the docbase management system.

9. The method of anyone of claims 1 to 8, wherein the standard interface of the docbase management system is Unstructured Operation Markup Language (UOML).

10. A system for document processing, comprising: a document processing apparatus, application software and a docbase management system, wherein
the document processing apparatus is adapted to record layout information of a document to be operated by the application software, convert the document to be operated into a document conforming to a docbase standard based on the layout information recorded;
the application software is adapted to invoke a standard interface of the docbase management system, open the document conforming to the docbase standard converted by the document processing apparatus.

11. The system of claim 10, wherein the application software is further adapted to call the standard interface to edit the document conforming to the docbase standard.

12. A system for document processing, comprising: application software and a docbase management system, wherein
the application software is adapted to record layout information of a document to be operated, convert the document to be operated into a document conforming to a docbase standard based on the layout information recorded; call a standard interface of the docbase management system, and open the document conforming to the docbase standard.

13. The system of claim 12, wherein the application software is further adapted to call a standard interface to edit the document conforming to the docbase standard.

14. An apparatus for document processing, comprising:
a first module, adapted to record layout information of a document to be operated;
a second module, adapted to convert the document to be operated into a document conforming to a docbase standard based on the layout information recorded by the first module.

15. The apparatus of claim 14, further comprising:
a third module, adapted to invoke a standard interface of a docbase management system to open and display the document conforming to the docbase standard converted by the second module.

16. The apparatus of claim 14 or 15, further comprising:
a fourth module, adapted to call a standard interface of the docbase management system to edit the document conforming to the docbase standard opened by the third module.

17. The apparatus of claim 14, 15 or 16, wherein the first module and the second module invoke a virtual printer for implementing respective functions.
